(19) Europäisches Patentamt
European Patent Office
Office européen des brevets

(11) Publication number: 0 269 236 B1

(12) EUROPEAN PATENT SPECIFICATION

(45) Date of publication of patent specification: 03.04.91

(51) Int. Cl.[5]: C07F 7/18, //C07D205/08, C07C251/02

(21) Application number: 87309104.5

(22) Date of filing: 15.10.87

# (54) Process for synthesis of a chiral azetidinone.

(30) Priority: 24.10.86 US 922969

(43) Date of publication of application: 01.06.88 Bulletin 88/22

(45) Publication of the grant of the patent: 03.04.91 Bulletin 91/14

(84) Designated Contracting States: AT BE CH DE ES FR GB IT LI LU NL SE

(56) References cited:
EP-A- 0 171 064
DE-A- 3 522 081
DE-A- 3 620 467
GB-A- 2 144 419

SYNTHESIS, no. 6, June 1973, pages 327-346, Georg Thieme Verlag, Stuttgart; A.K. MUKERJEE et al.: "Syntheses of Beta-Lactams"

TETRAHEDRON LETTERS, vol. 26, no. 33, 1985, pages 3903-3906, Pergamon Press, Oxford, GB; G.I. GEORG et al.: "3-(1'-hydroxyethyl)-2-azetidinones from 3-hydroxybutyrates and N-arylaldimines"

(73) Proprietor: MERCK & CO. INC.
126, East Lincoln Avenue P.O. Box 2000
Rahway New Jersey 07065-0900(US)

(72) Inventor: Shinkai, Ichiro
451 Channing Avenue
Westfield New Jersey 07090(US)
Inventor: Fuentes, Lelia M.
47 Doris Parkway
Westfield New Jersey 07090(US)

(74) Representative: Hesketh, Alan, Dr.
European Patent Department Merck & Co., Inc. Terlings Park Eastwick Road
Harlow Essex, CM20 2QR(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

### BACKGROUND OF THE INVENTION

#### 1) Field of the Invention

This invention relates to a stereo-controlled process for producing azetidinone intermediates having desired chirality which are essential in carbapenem synthesis.

#### 2) Brief Description of Disclosures in the Art

Carbapenem antibiotics, particularly thienamycin and imipenem (see U.S. Patent Nos. 3,950,377 and 4,194,047) are well known for treating a broad spectrum of gram-negative and gram-positive bacterial infections.

Processes for synthesis of these type antibacterial agents are well known in the art as witness the following patents issued inter alia to Merck & Co.; U.S. Patent Nos. 4,543,257, 4,234,596 and 4,232,030.

In order to develop, faster, less expensive and better methods for their production, research is continually being carried out in this area. One focus in this field has been on different modes synthesis of the starting azetidinone intermediates.

The one-step cycloaddition of an imine and a ketene to product azetidinones is well known in the art, e.g. H. Staudinger and S. Jologin, Chem. Ber., 1911, 44 p. 373.

Reider and Grabowski, describe in Tetrahedron Letters, Vol. 23, No. 22, pp. 2293-96, (1982) the chiral synthesis of the starting azetidinones useful in carbapenem synthesis in a four step procedure starting with (l)-aspartic acid.

Gunda Georg, in Tetrahedron Letters, Vol. 25, No. 35, pp. 3779-3782 (1984) and ibid., Vol. 26, No. 33, pp. 3903-3906 (1985) describes the one-step synthesis of azetidinone intermediates which can be used in carbapenem synthesis starting with 3-(s )-hydroxybutyrate and the racemic form, thereof, respectively.

M. Shiozaki et al. in Tetrahedron, Vol. 40. No. 10, pp. 1795-1802 (1984) describe a synthetic procedure for developing azetidinone intermediates starting with L-threonine in a five-step procedure to arrive at starting azetidinones useful in carbapenem synthesis.

The reference Tetrahedron Letters, Vol. 27, No. 36, pp. 4359-4362 (1986) by Aizpurua et al. describes the reaction between 2-methylcinnamylidene-imines and acid halides or equivalents leading to the stereospecific formation of cis-beta-lactams.

The reference Tetrahedron Letters, Vol. 27, No. 19, pp. 2149-2152 (1986) by Iimori et al. describes the stereoselective aldol-type condensation of a vinylborane derived from S -phenyl 3(R )-hydroxybutanethioate with N -3-trimethylsilyl-2-propynylidenebenzylamine to produce a chiral azetidinone.

U.K. Patent Application 2 144 419 to Farmatalia describes a cycloaddition process for producing azetidinones in one step in which a bromobutyryl intermediate is reacted in situ to form a bromo ketene which is then reacted with an imine to directly form a chiral azetidinone. However, the obtained azetidinone developed by this procedure results in the azetidinone having 5(R ), 3(R ), stereochemistry. Subsequently, the bromo derivative must be removed by reduction to introduce hydrogen at that position in the desirable trans configuration. It would be desirable if the process produced the desired azetidinone 5(R ), 3(S ) stereochemistry directly, instead of requiring a subsequent reduction step of the resulting bromo compound.

### SUMMARY OF THE INVENTION

It has been found that by reacting an 3-(R )-hydroxybutyrate with an imine, being an N-protected, C-acyl, -aryl, -aryloxy, or acyloxyimine, under anhydrous conditions at low temperature during which the chiral butyrate compound is initially converted in situ to a transient ketene intermediate and then allowed to undergo a ketene-imine cycloaddition addition under mild conditions, there is directly obtained the azetidinone intermediate, required for carbapenem synthesis, in which the hydroxyethyl group in the 3-carbon atom of the azetidinone intermediate does not require subsequent inversion to the 5(R ),3(S ) azetidinone stereoconfiguration. Conversion of this intermediate directly to carbapenem intermediate then follows standard procedures.

In accordance with this invention there is provided a process for preparing the chiral azetidinone

compound:

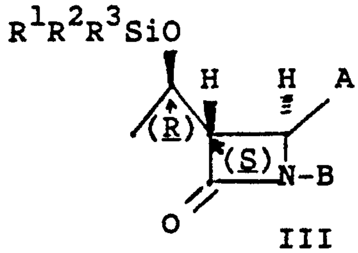

III

comprising the step of contacting the chiral butyryl compound:

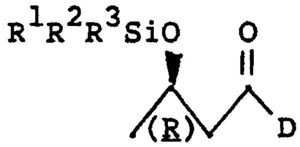

I

with the imine:

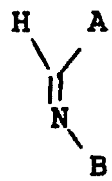

II

in an organic solvent therefor and in the presence of an organic amine capable of generating a ketene from the butyryl compound; in the temperature range of -60°C to +120°C, for a sufficient time to yield the desired azetidinone III; wherein $R^1$, $R^2$ and $R^3$ are independently selected from $C_1$-$C_5$ alkyl or aryl, optionally substituted with groups inert under the reaction conditions; D is halo, or an effective organic leaving group under the reaction conditions; B is an imine-nitrogen protecting group removable by oxidation, acid hydrolysis or catalytic hydrogenation under mild conditions; A is $C_1$-$C_5$ linear or branched acyl or $C_6$-$C_8$ aroyl, which can optionally be substituted by groups inert under the reaction conditions, such as acyloxy or aryloxy.

## DESCRIPTION OF THE INVENTION AND PREFERRED EMBODIMENTS

The process of the invention can easily be described and understood by referring to the following Flow Chart A.

Compound I, being the butyryl compound, first having been converted to a ketene intermediate, "I-Ketene" e.g. by contacting with an organic base, e.g. disopropyethylamine in anhydrous methylene chloride at -40°C, is reacted, for example, in the same solvent at -40°C with the imine II. Generation of the ketene intermediate followed by reaction with imine II results in two diastereoisomers: the desired cis azetidinone III, and the other cis isomer, IIIa. Generally, the condensation step involves cis addition with very little trans isomer being formed. Separation of the desired 5(R), 3(S) isomer (III) from the crystalline mixture of both diastereoisomers by fractional crystallization followed by treatment of the resulting cis isomer III, for example, with potassium fluoride on, aluminum oxide in THF at room temperature, forms compound IV in which the stereochemistry is now 5(R),3(S),4(R). Treatment of IV, for example, under mild acidic conditions with tetrabutylammonium fluoride removes the protecting silyl group from the hydroxyethyl group

in the 3-position to form V. Treatment of V, for example, with ceric (IV) ammonium nitrate to remove the N-protecting group results in compound VI. Treating compound VI, for example, with meta-chloroperbenzoic acid by the known Baeyer-Villiger oxidation then results in the desired intermediate VII.

Flow Chart B illustrates conversion of VII to the well-known carbapenem bicyclic ketoester intermediate, IX, as described in USP 4,318,912, hereby incorporated by reference for this particular purpose.

FLOW CHART A

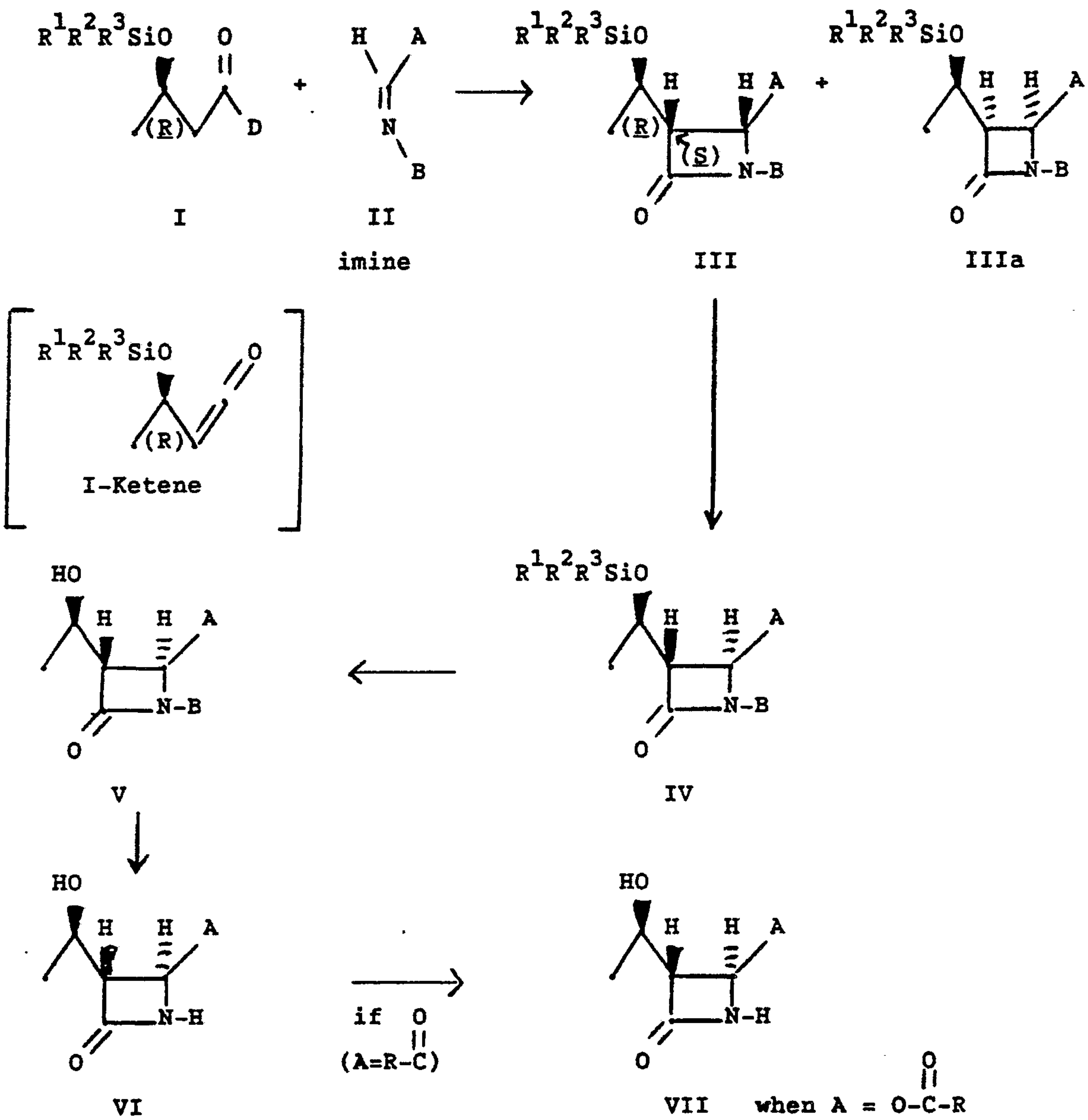


I II imine III IIIa

I-Ketene

V IV

VI VII when A =

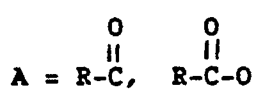

## FLOW CHART B

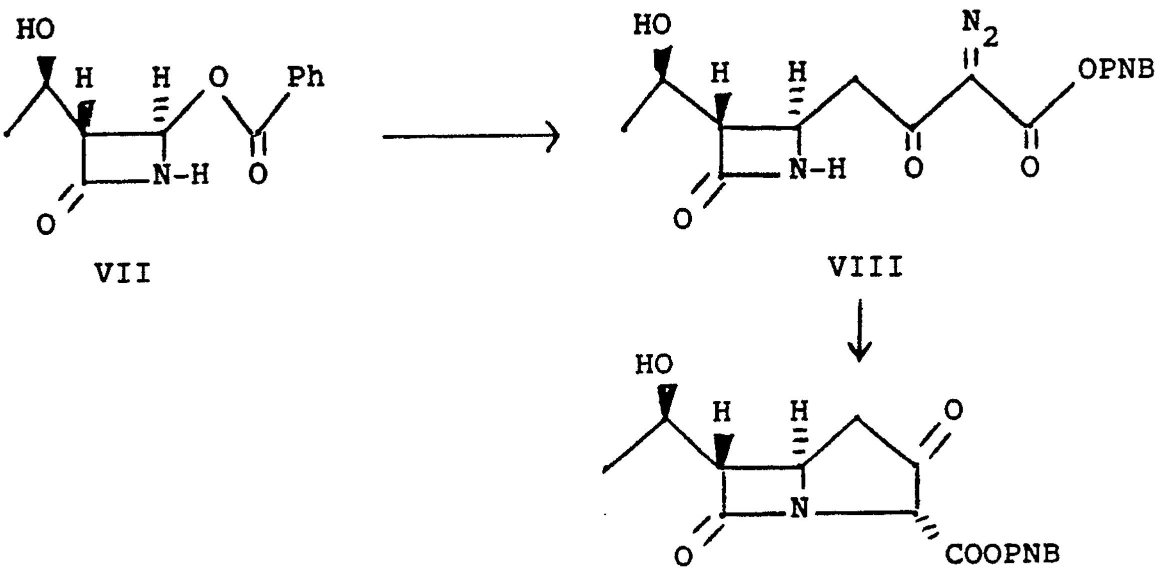

VII VIII IX

The above flow chart establishes utility for the intermediates formed by this process in relation to the main carbapenem intermediate in forming carbapenem antibiotics, i.e. thienamycin and imipenem.

Included in the description of structure I, the chiral butyrate compound, is the requirement that this compound be capable of forming a ketene in solution in the presence of an organic amine base. For this invention it is required that carbon-3 of the butyrate be in the R stereoconfiguration. The hydroxy group in the 3-position can be protected by a conventional silicon protecting group which is used in the antibiotic art, e.g. see USP 4,196,211, which is hereby incorporated by reference for this particular purpose.

$R^1$, $R^2$, $R^3$ are conventional and for example, selected from $C_1$-$C_5$ linear or branched alkyl or aryl, optionally substituted by groups which do not interfere in the invention process. Representative examples include methyl, ethyl, iso-propyl, butyl, sec.-butyl, tert.-butyl, and pentyl; and aryl, which can be phenyl and substituted phenyl, wherein the substituents include e.g. methoxy, chloro, or nitro, which do not interfere with the desired reaction. Preferred silyl protecting groups include dimethyl-t-butylsilyl, trimethylsilyl, phenyldimethylsilyl, benzyldimethylsilyl and the like. A preferred silyl protecting group is dimethyl-t-butylsilyl.

D is chosen from: halo, including chloro, bromo and fluoro; $OP=O(OPh)_2$; imidazole; or $O(C=O)R^1$, where $R^1$ is branched $C_3$-$C_4$ alkyl, i.e. t-butyl. Ph is phenyl. Preferred is where D is chloro. The particular group D has the characteristic in that it is functionally an effective organic leaving group capable of generating a ketene when the butyrate compound is contacted with an organic base.

The starting 3-(R )(-)-hydroxybutyric acid, is commercially available from Aldrich Chemical Co. Also, the butyryl compound can be made according to the well-known methods as described in the art, e.g., Seebach, D.; Imwinkelried, R.; Studky, G.; Angew . Chem ., Int . Ed ., 1986, 25 , 178. Seebach, D.; Zuger, M.F.; Helv. Chim. Acta , 1982, 65 , 495.

The imine II is preferably of the structure as indicated where the substituents A and B are cis to one another on the imine. However, the imine can also be in the trans configuration, but for convenience, the structure is drawn in the cis form, but is understood to be either cis , trans , or mixtures thereof.

B is a nitrogen-protecting group which is removable by conventional procedures, for example, by mild acid hydrolysis, by conventional ceric ammonium nitrate oxidative cleavage, or by catalytic hydrogenation such as Raney nickel catalysis in ethanol. Representative examples of B substituents include para-methoxyphenyl, p-t -butoxyphenyl, 3,4-dimethoxyphenyl, 2,4-dimethoxyphenyl, 3,5-dimethyl phenyl, and the like. Preferred is para-methoxy phenyl.

Group A is acyl, aryl, acyloxy or aroyloxy, of the formula

$$R-\overset{O}{\overset{\|}{C}}-[O]_n,$$

where n is 0 or 1 and R is a $C_1$-$C_5$ linear or branched alkyl or $C_6$-$C_{11}$ aryl, heterocyclic group, optionally substituted with electron-donating or electron-withdrawing substituents which do not interfere in the process including halo, nitro, alkoxy, i.e. chloro or methoxy. Representative examples include methyl, ethyl, isopropyl, butyl, pentyl, phenyl, and the like. Preferred in the reaction is phenyl or methyl.

Procedures for making the imine involve condensations between an aldehyde or its equivalent and primary amine and are described in the literature, for example, in Farrar, Rec. Chem. Prog. 29 , 85-101 (1968), hereby incorporated by reference for this particular purpose.

The process of the instant invention is carried out generally by first generating the ketene (I) in situ in solution, since it is unstable, by reaction of the butyryl structure I with an organic base. If the butyryl compound is an acid chloride it can be made directly from the corresponding acid by reaction with chlorinating agents such as oxalyl chloride, thionyl chloride, and the like, neat in liquid solution or in a solvent such as dichloromethane at low temperature such as 0° C to room temperature under anhydrous conditions. If the butyryl compound is an ester containing leaving group D, it is used directly, in the presence of the organic imine in solution to generate the ketene.

The organic amine which is used in the ketene generating process is a nitrogen-containing organic amine which can be a conventional trialkylamine, triarylamine, or mixed types such as monoaryldialkylamine, heteroaryl dialkylamine, nitrogen heteroarylamine and the like. Representative organic nitrogen-containing amines include triethylamine, trimethylamine, methyldiethylamine, methyldiisopropylamine, pyridine, quinoline, N-methylpyrrolidine, N,N'-dimethylpiperazine and the like. Preferred is diisopropylethylamine.

The ketene generation method can be conducted in an inert organic solvent such as $C_1$-$C_4$ halogenated hydrocarbon, containing 1-4 halogen atoms, $C_2$-$C_5$ straight chain or cyclic ethers, or alkyl nitriles with the stipulation that they contain no reactive functional group which would interfere with the reaction and that the reaction conditions are carried out under anhydrous conditions. Representative examples include halogenated alkanes, alkyl and cycloalkyl ethers and alkyl nitriles including dichloromethane, diethyl ether, acetonitrile, tetrahydrofuran, dioxane and the like. Preferred is dichloromethane.

The reaction is generally conducted in temperature range of about -40 to +60° C, preferably in the range of -40° to +25° C. Generally, the ketene generation is conducted at lower temperatures and the imine condensation allowed to proceed at slightly higher temperatures.

The reaction can be conducted at atmospheric pressure or under a slight vacuum up to several pressures. Preferred is atmospheric pressure.

Following the generation of the ketene in situ , the imine is generally combined there with the solution in a solvent and the ketene-imine reaction allowed to occur under anhydrous conditions at a very fairly low temperature being -20° to room temperature. The reaction can require anywhere from 15 minutes to 1 hour or even longer depending on the desired yield under mild conditions and anhydrous conditions in order to allow the ketene-imine reaction to go to its completion. Various modifications of carrying out the reaction procedure can be utilized including adding the organic amine to the butyryl compound-imine mixture, or adding the organic amine to the butyryl compound, then adding the imine or adding the formed ketene to the imine, and the like. Preferred is where the ketene is formed initially and then the imine added subsequently.

Generally, the obtained azetidinone structure III containing the desired 5(R ),3(S ) stereochemistry is obtained in about 60% yield. Both cis isomers III and IIIa are obtained in a III/IIIa ratio of about 60:40, in which the desired isomer, being isomer III, can be separated by standard methods known in the art, including fractional crystallization, column chromatography or high pressure liquid chromatography. The desired isomer III is then separated from the reaction mixture and then the beta hydrogen at ring position 4 is converted to the R configuration; the nitrogen protecting group is cleaved; the silyl protecting group removed, and the compound subjected to a Baeyer-Villiger reaction to derive Compound VII which is the prime intermediate leading to the condensation reaction. Details and examples of these specific processes are given in the following examples.

Standard apparatus used in the art is useful for carrying out the claimed invention.

The following examples are indicative of carrying out the invention as regarded by as and should not be construed as being limitations on the scope or spirit of the instant invention.

## EXAMPLE 1

### Step A . Methyl-(R)-3-(t-butyldimethylsilyloxy)butyrate

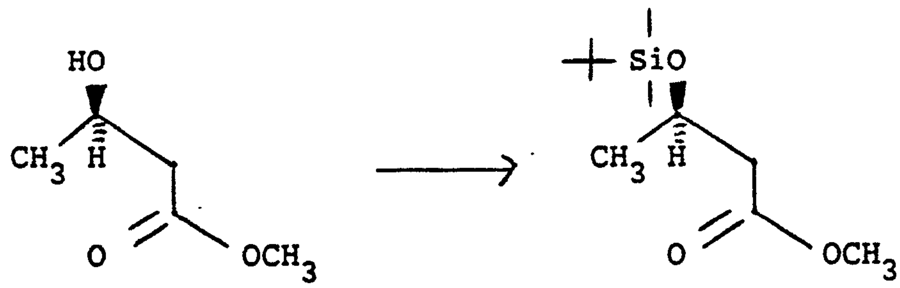

1 2

### Materials

| | |
|---|---|
| Methyl-(R)-3-hydroxybutyrate (1) (MW=118.13) | 42.00 g, 0.355 mol |
| t-Butyldimethylsilylchloride (MW=150.73) | 54.26 g, 0.360 mol |
| Imidazole (MW=68.08) | 25.53 g, 0.375 mol |

A mixture of 42.0 g (0.355 mol) of 1 , methyl-(R)-3-hydroxybutyrate, 54.56 g (0.360 mol) TBDMS-Cl, 25.53 g (0.375 mol) imidazole in 200 ml of anhydrous DMF was stirred at room temperature for 12 hours. To the resultant mixture was added 300 ml of mixed hexanes and extracted (3 x 200 ml) with 1N HCl and $H_2O$ (100 ml), dried over anhydrous $MgSO_4$ and concentrated *in vacuo* . The crude product 2 , 81.23 g, (98.5%) was used without further purification.
$^1$H-NMR (300 MHz, $CDCl_3$) δ 4.29 (m, $CH_3CH$ OSi);3.67 (s, $OCH_3$); 2.43 (AB, $CH_2CO_2$, J = 14.4, 7.7, 5.3 Hz); 1.19 (d, $CH_3CHOSi$, J = 6.1 Hz); 0.86 (s, t-Bu Si); 0.07, 0.04 (two s, $Me_2Si$).

### Step B . 3-(R)-(t-Butyldimethylsilyloxy)butanoic Acid

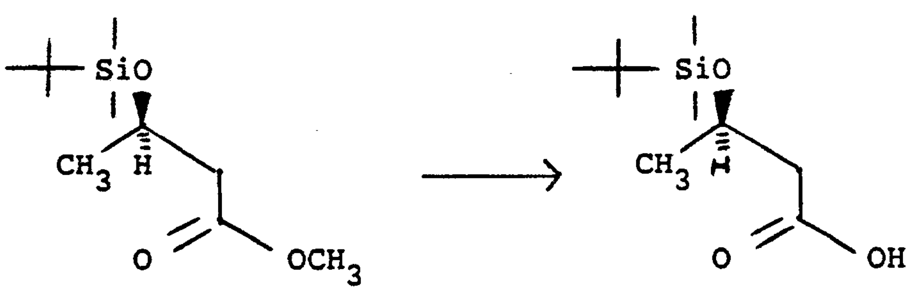

2 3

Materials

| | |
|---|---|
| (R)-TBDMS-HOBA (MW=232.32) (2) | 26.8 g, 0.115 mol |
| LiOH (1.03M) | 160 ml, 0.165 mol |

To magnetically stirred mixture of 26.8 g (0.115 mol) of 2 , (R)-TBDMS-HOBA, in 160 ml of THF was added 160 ml of LiOH (1.03M). The reaction mixture was stirred at room temperature for 6 hours. The THF was removed in vacuo and the crude product 3 was extracted with $CH_2Cl_2$. The aqueous layer was acidified to pH=4 with concentrated HCl. The aqueous layer was extracted with $CH_2Cl_2$ (2 × 100 ml), dried over $MgSO_4$ and concentrated in vacuo to afford 19.59 g of 3 (93.8%) as a colorless liquid.

HPLC Assay : Altex Ultrasphere-Octyl, 5 μ, 25 cm × 4.6 mm ID, acetonitrile:water:$H_3PO_4$; 70:30:1, v/v 1.1 ml/min, 210 nm, sample injection volume: 10 μl, concentration: 1 mg/component/ml. Retention Times (min.) hydroxy acid methyl ester, 3.0; TBDMS-methyl ester, 10.4; TBDMS-acid, 5.7.

H-NMR (300 MHz, $CDCl_3$) δ 4.28 (m, $CH_3CH$ OSi); 2.50 (d, $CHCH_2CO$, J=5.9 Hz); 1.24 (d, $CH_3CHOSi$, J=6.1 Hz); 0.89 (s, t-Bu Si); 0.10, 0.09 (two s, $Me_2Si$).

Step C . p-Methoxyphenyl-phenylglyoxal-imine

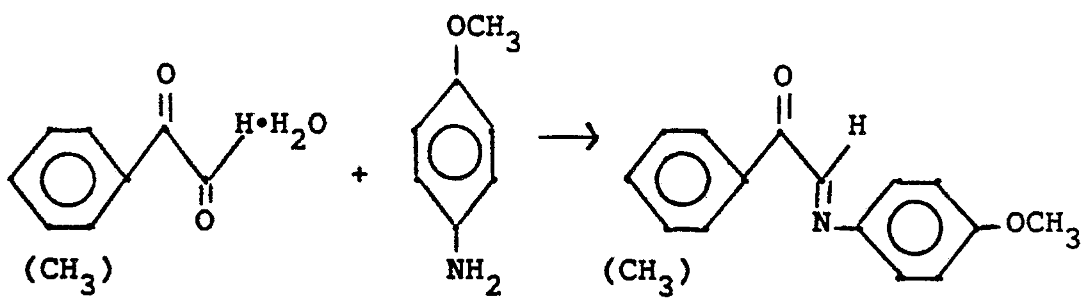

4 5 6

Materials

| | |
|---|---|
| Phenylglyoxalmonohydrate (4) (MW=152.15) | 20.6 g, 0.135 mol |
| p-Anisidine (MW=123.16) (5) | 16.7 g, 0.135 mol |
| Sieves 3A | 20.0 g |

To the $PhCOCHO \bullet H_2O$ 4 , p-anisidine 5 , and the molecular sieves 3A (from Aldrich Chemical), was added 200 ml of $CH_2Cl_2$ and stirred at room temperature for 8 hours. The product 6 was filtered and the concentration adjusted to 0.65M in $CH_2Cl_2$. The product was used without further purification.

TLC : (1:1 EtOAc/Hexanes) Rf=0.90 visible, yellow spot. The p-anisidine Rf=0.70. HPLC retention time=16.0 minutes.

Step D . (R)-3-(t-Butyldimethylsilyloxy)butyryl Chloride

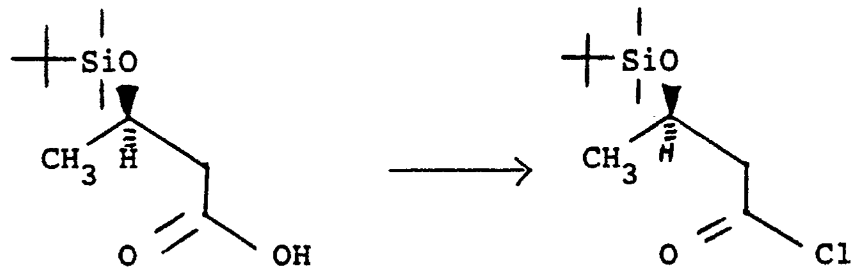

3 7

Materials

| | |
|---|---|
| TBDMS-HOBA (MW=218.29) (3) | 4.83 g, 22.13 mmol |
| Oxalyl chloride (MW=129.93, d=1.445) | 4.0 ml, 44.25 mmol |

To the neat TBDMS-HOBA 3 was added dropwise the oxalyl chloride at room temperature controlling the evolution of gas ($CO_2$). After 15 minutes at room temperature, the excess oxalyl chloride was removed with a sweep of nitrogen. Complete conversion to product 7 was followed by 300 MHz NMR.

H-NMR (300 MHz, $CDCl_3$) δ 4.35 (m, $CH_3CH$ OSi); 2.95 (AB, $CHCH_2CO$, J=15.3, 7.8, 4.8 Hz); 1.23 (d, $CH_3CHOSi$, J=6.2 Hz), 0.88 (s, t-Bu Si); 0.09 (s, Me Si).

Step E. Ketene-Imine Addition

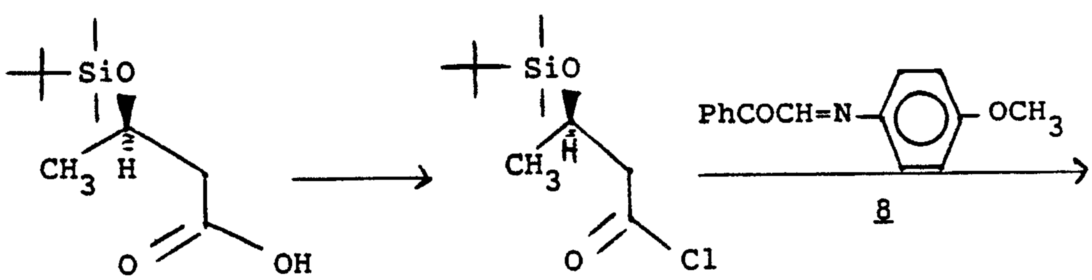

3 7

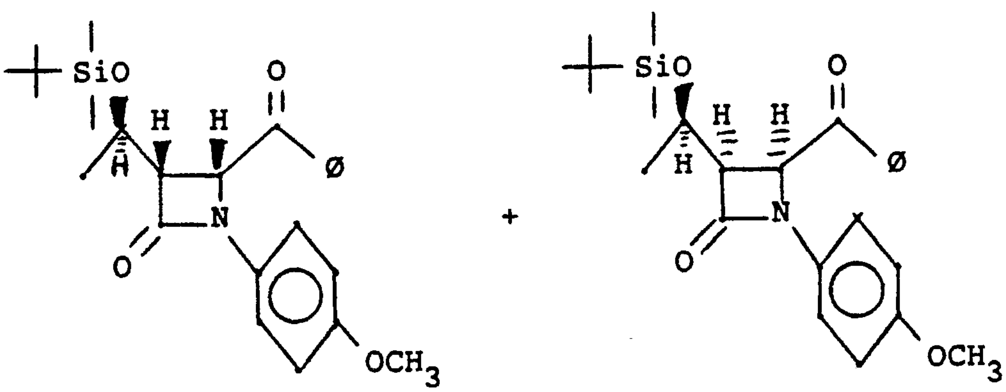

9 10

Materials

| | |
|---|---|
| (R)-TBDMS-HOBA (MW=232.32) | 1.0024 g, 4.40 mmol |
| Oxalyl chloride (MW=129.93, d=1.445) | 0.82 ml, 9.18 mmol |
| Keto-imine (0.65M) | 7.45 ml, 4.45 mmol |
| $iPr_2NEt$ (MW=129.25, d=0.726) | 0.92 ml, 6.60 mmol |

The acid chloride 7 was generated following procedure D . This unpurified acid chloride was employed in the subsequent cyclo-addition. To a 0.35M solution of 1.0 equivalent of the acid chloride 7 in $CH_2Cl_2$, cooled to -40° C, is added the 1.5 equivalents of $iPr_2NEt$. After 15 minutes a 0.65M solution of the imine 8 (1.1 equivalents) is added. The cooling bath is removed and the reaction is warmed to, and held at, 0° C for 5 hours. After aqueous acid extraction (100 ml $NH_4Cl$), followed with $H_2O$ (100 ml), the organic layer was dried ($MgSO_4$) and concentrated in vacuo to 2.02 g (Theoretical Yield = 1.99 g) of the crystalline mixture of diastereoisomers 9 and 10 . The two product diastereomers were easily separable by flash chromatography on silica gel with an Rf difference of 0.25 in EtOAc-hexanes. The diastereomeric mixture of 9 :10 was determined by 300 MHz H-NMR to be 60:40.

H-NMR (300 MHz, $CDCl_3$) δ 8.50-7.15 (m, 9H, Ar-H); 5.79 (d, $H_4$-6 , J=6.4 Hz); 4.67 (m, $CH_3CH$ OSi-5 ); 4.55 (m, $CH_3CH$ -OSi-5 ); 4.55 (m, $CH_3CH$ OSi-6 ); 4.25 (dd, $H_3$-6 , J=5.8, 2.2 Hz); 4.17 (s, $OCH_3$ = 6 ); 4.15 (s, $OCH_3$-5 ); 4.11 (dd, $H_3$-5 , J=6.4, 2.2 Hz); 1.71 (d, $CH_3CHOSi$-5 , J=6.2 Hz); 1.67 (d, $CH_3CHOSi$-6 , J=6.4 Hz); 1.18 (s, t-Bu Si-6 ); 1.07 (s, t-Bu Si-5 ); 0.29, 0.24, 0.20, 0.00 (four s, $Me_2Si$-5 and 6 ).

## EXAMPLE 2

Step F . Correlation of Stereochemistry: $nBu_4NF$ Deprotection and KF-Alumina Filtration

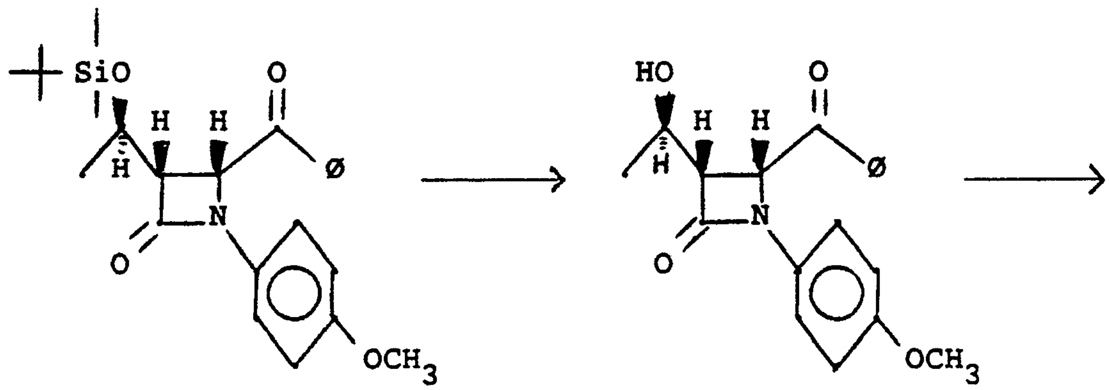

9 11

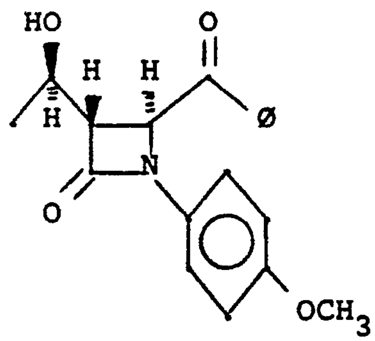

12

To 23.4 mg of the crude reaction product 9 previously obtained in step E was added 67.8 mg of KF on alumina in 5.0 ml of THF. The solution was filtered, and reacted with 0.5 ml of n-$Bu_4NF$ at room temperature for 0.5 hour, concentrated in vacuo, and purified by radial chromatography to yield 13.0 mg of the trans-diastereomeric $\beta$-lactam 11. The stereochemistry was assigned by comparison of spectral data of pure 7 with that described by Hanessian et al., J. Am. Chem. Soc. 1985, 107, 1438-1439, hereby incorporated by reference for this particular purpose.

Step G. Deprotection and Baeyer-Villiger Oxidation

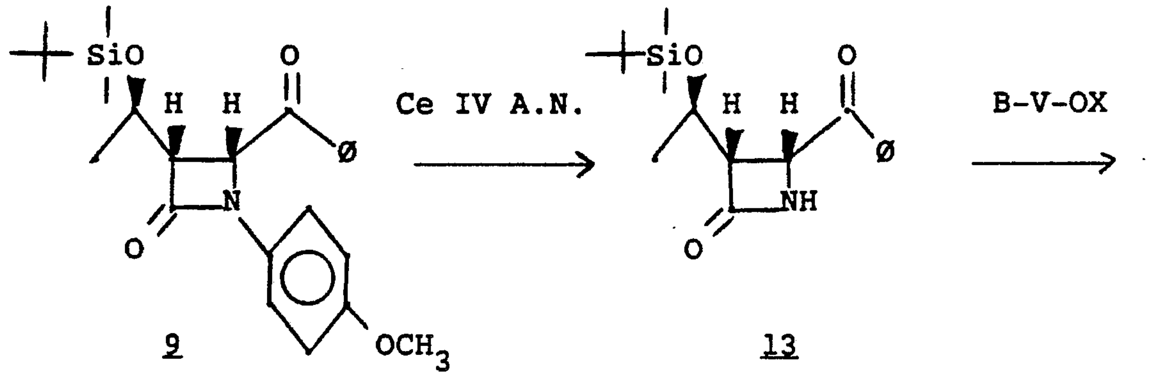


9 13

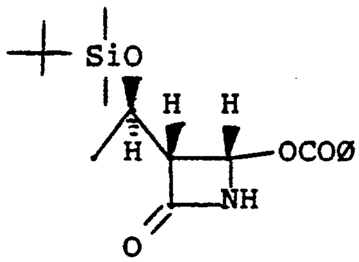

14

The diastereoisomer 9 was subjected to oxidative dearylation with ammonium cerium (IV) nitrate, (Ce IV A.N.) to obtain the NH β-lactam 13 in 96.7% yield following the literature procedure of Hanessian et al ., J. Am. Chem. Soc. 1985 , 107, 1438-1439. Subsequent Baeyer-Villiger Oxidation (B-V-OX) 12 Hanessian et al ., J. Am. Chem. Soc. 1985 , 107, 1438-1439, afforded 14 in 90% yield.

## Claims

1. A process for preparing the chiral azetidinone compound:

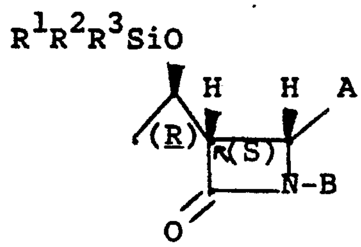

III

comprising the step of contacting the chiral butyryl compound:

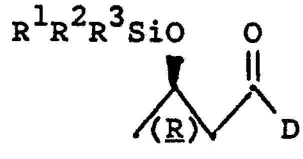

I

with the imine:

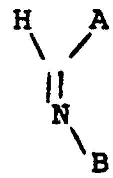

II

in an organic solvent therefor and in the presence of an organic amine capable of generating a ketene from the butyryl compound; in the temperature range of -60° C to +120° C, for a sufficient time to yield the desired azetidinone III; wherein $R^1$, $R^2$ and $R^3$ are independently selected from $C_1$-$C_5$ alkyl or aryl, optionally substituted with groups inert under the reaction conditions; D is halo, or an effective organic leaving under the reaction conditions; B is an imine-nitrogen protecting group removable by oxidation, acid hydrolysis, or catalytic hydrogenation under mild conditions; A is $C_1$-$C_5$ linear or branched acyl or acyloxy, $C_6$-$C_8$ aroyl or aryloxy which can optionally be substituted by groups inert under the reaction conditions.

2. The process of Claim 1 wherein the temperature is in the range of -40 to +60° C.

3. The process of Claim 1 wherein the organic solvent is selected from halogenated alkanes, alkyl ethers, or cyclic ethers.

4. The process of Claim 1 wherein the tertiary organic amine is selected from tri-$C_1$-$C_5$-alkylamines, N-alkylcycloalkylamines or heterocyclic amines.

5. The process of Claim 1 wherein $R^1R^2R^3Si$ is selected from dimethyl-t-butylsilyl, trimethylsilyl or phenyldimethylsilyl.

6. The process of Claim 1 wherein D is selected from chloro, bromo, iodo

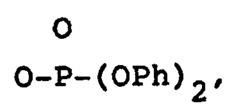

, imidazolyl, or -O-C=O($R^4$) wherein $R^4$ is t-butyl.

7. The process of Claim 1 wherein A is selected from acetyl, propionyl, benzoyl, acetoxy, propionate, or benzoyloxy.

8. The process of Claim 1 wherein B is selected from p-methoxyphenyl, 2,4-dimethoxyphenyl, 3,5-dimethylphenyl or p -methoxybenzyl.

9. The process of Claim 1 wherein the azetidinone is:

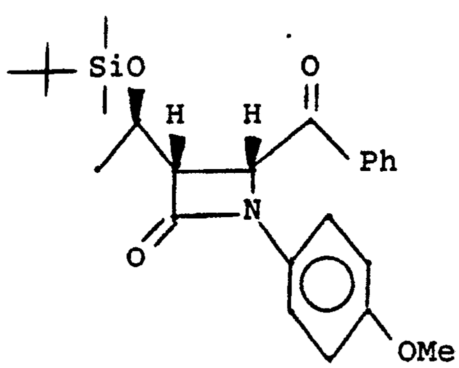

10. A process for producing the chiral azetidinone:.

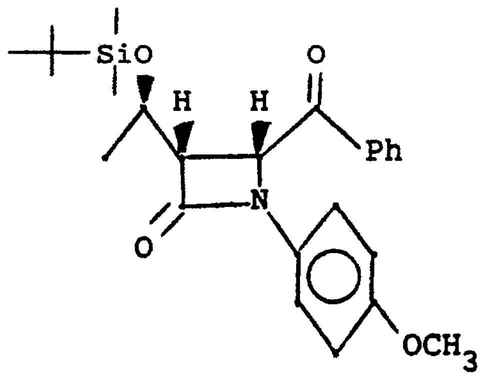

comprising the step of contacting the chiral butyryl compound:

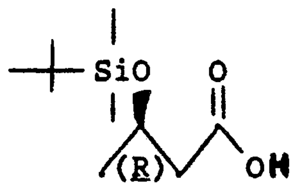

with oxalyl chloride at room temperature under anhydrous conditions to form the corresponding acid chloride:

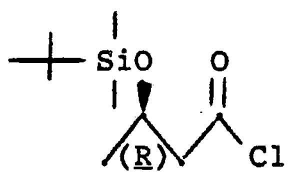

followed by contacting the formed acid chloride with the imine:

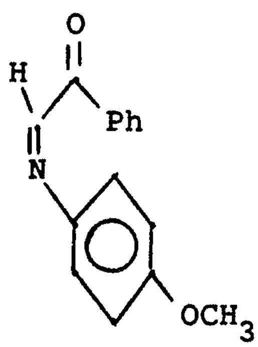

in dichloromethane solvent, at -40° C, in the presence of diisopropylethylamine, and conducting the reaction between the temperature range of -40 to 25° C for a sufficient time to yield the desired chiral azetidinone.

## Revendications

1. Procédé de préparation d'une azétidinone chirale

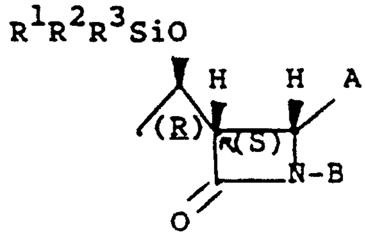

III

consistant à mettre en contact le composé butyryle chiral:

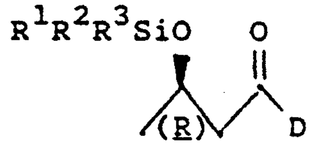

I

avec l'imine:

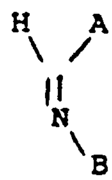

II

dans un solvant organique pour celle-ci et en présence d' une amine organique capable d'engendrer un cétène à partir du composé butyrylique, dans la gamme des températures de -60 à +120 °C, pendant une durée suffisante pour obtenir l' azétidinone désirée III ; formules dans lesquelles $R^1$, $R^2$ et $R^3$ représentent chacun indépendamment un radical alkyle ou aryle en $C_{1-5}$, facultativement substitué par des groupes inertes dans les conditions de réaction ; D est halo, ou un groupe partant organique efficace dans les conditions de réaction ; B est un groupe protecteur d'azote d'imine amovible par oxydation, 1' hydrolyse acide ou l'hydrogénation catalyti - que dans des conditions douces ; A est un radical acyle ou acyloxy linéaire ou ramifié en $C_{1-5}$ , aryle ou aryloxy en $C_{6-8}$ pouvant être facultativement substitué par des groupes inertes dans les conditions de réaction.

**2.** Procédé selon la revendication 1, dans lequel la température est comprise entre -40 et 60°C.

**3.** Procédé selon la revendication 1, dans lequel le solvant organique est choisi parmi les alcanes halogénés, les éthers alkyliques ou les éthers cycliques.

**4.** Procédé selon la revendication 1, dans lequel l'amine organique tertiaire est choisie parmi les trialkylamines en $C_{1-5}$ , les N-alkylcycloalkylamines ou les amines hétérocycliques.

**5.** Procédé selon la revendication 1, dans lequel le groupe $R^1$ $R^2$ $R^3$ Si est choisi parmi le diméthyl -t-butyl-silyle, le triméthylsilyle ou le phényldiméthylsilyle.

**6.** Procédé selon la revendication 1, dans lequel D est choisi parmi les groupes chloro, bromo, iodo,

$$-O-\overset{\overset{O}{\|}}{P}-(OPh)_2,$$

imidazolyle ou -0-C = 0($R^4$) dans lequel $R^4$ représente Le t-butyle.

7. Procédé selon la revendication 1, dans lequel A est choisi parmi les groupes acétyle, propionyle, benzoyle, acétoxy, propionate ou benzoyloxy.

8. Procédé selon la revendication 1, dans lequel 8 représente le groupe p-méthoxyphényle, 2,4-diméthoxyphényle, 3,5-diméthylphényle ou p-méthoxybenzyle.

9. Procédé selon la revendication 1, dans lequel l'azétidinone est:

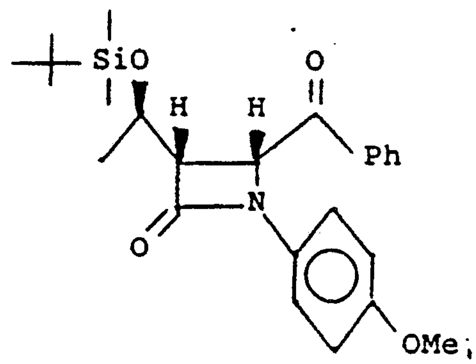

10. Procédé de production d'azétidinone chirale :

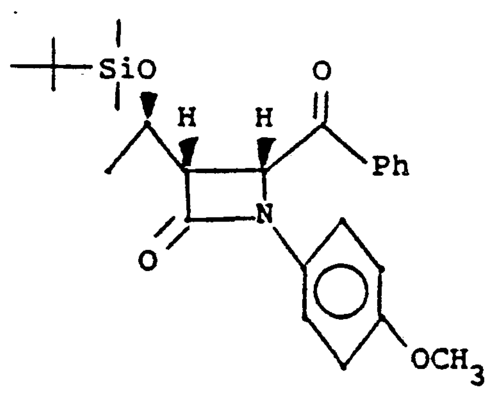

qui consiste à mettre en contact le composé butyryle chiral:

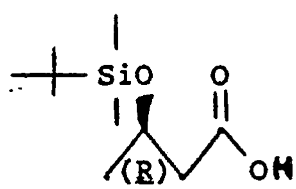

avec le chlorure d'oxalyle à température ambiante dans des conditions anhydres pour former le chlorure d'acide correspondant :

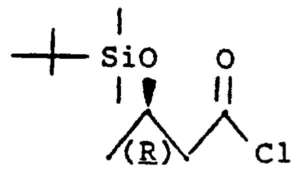

puis à mettre en contact le chlorure d'acide ainsi formé avec l'imine :

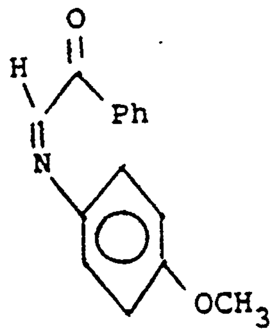

dans le dichlorométhane solvant à -40 °C, en présence de diisopropyléthylamine et à effectuer la réaction à une température comprise entre -40 et +25 °C pendant une durée suffisante pour obtenir l'azétidinone chirale désirée.

**Ansprüche**

1. Verfahren zur Herstellung der chiralen Azetidinonverbindung

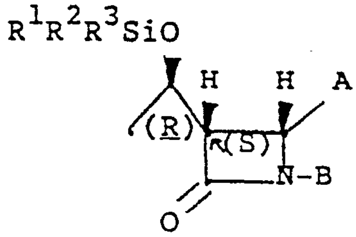

III

welches als Schritt das Inberührungbringen der chiralen Butyrylverbindung

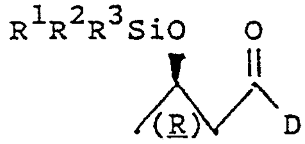

I

mit dem Imin

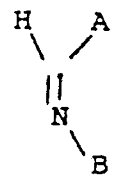

II

in einem organischen Lösungsmittel dafür und in Gegenwart eines organischen Amins, das ein Keten aus der Butyrylverbindung erzeugen kann, in einem Temperaturbereich von -60° C bis +120° C über eine Zeit, die ausreicht, das erwünschte Azetidinon 111 zu ergeben, um-faßt; worin $R^1$, $R^2$ und $R^3$ unabhängig aus $C_1$-$C_5$-Alkyl oder Aryl, gegebenenfalls mit unter den Reaktionsbedingungen inerten Gruppen substituiert, ausgewählt sind; D Halogen oder eine unter den Reaktionsbedingungen wirksame organische austretende Gruppe ist; B eine durch Oxidation, saure Hydrolyse oder katalytische Hydrierung unter milden Bedingungen entfernbare Imin-Stickstoff-Schutzgruppe ist; A gradkettiges oder verzweigtes $c_1$-$c_5$-Acyl oder -Acyloxy, $C_6$-$C_8$-Aroyl oder Aryloxy ist, das gegebenenfalls durch unter den Reaktionsbedinungen inerte Gruppen substituiert sein kann.

2. Verfahren nach Anspruch 1, worin die Temperatur im Bereich von -40 bis +60° C liegt.

3. Verfahren nach Anspruch 1, worin das organische Lösungsmittel aus halogenierten Alkanen, Alkylethern oder cyklischen Ethern ausgewählt wird.

4. Verfahren nach Anspruch 1, worin das tertiäre organische Amin aus Tri-$C_1$-$C_5$-alkylaminen, N-Alkylcycloalkylaminen oder heterocyklischen Aminen ausgewählt wird.

5. Verfahren nach Anspruch 1, worin $R^1R^2R^3Si$ aus Dimethyl-t-butylsilyl, Trimethylsilyl oder Phenyldimethylsilyl ausgewählt wird.

6. Verfahren nach Anspruch 1, worin D aus Chlor, Brom, Jod

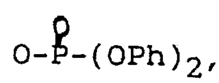

Imidazolyl oder -O-C-O($R^4$), worin $R^4$ t- Butyl ist, ausgewählt wird.

7. Verfahren nach Anspruch 1, worin A aus Acetyl, Propionyl, Benzoyl, Acetoxy, Propionat oder Benzoyloxy ausgewählt wird.

8. Verfahren nach Anspruch 1, worin B aus p-Methoxyphenyl, 2,4-Dimethoxyphenyl, 3,5-Dimethylphenyl oder p-Methoxybenzyl ausgewählt wird.

9. Verfahren nach Anspruch 1, worin das Azetidinon

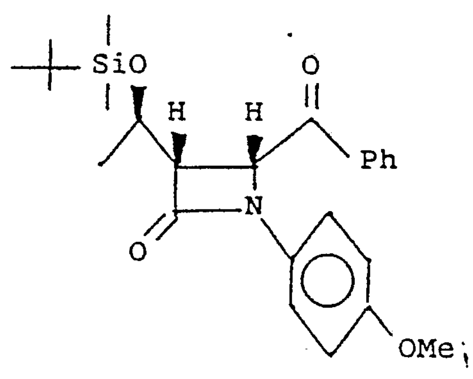

ist.

**10.** Verfahren zur Herstellung des chiralen Azetidinons

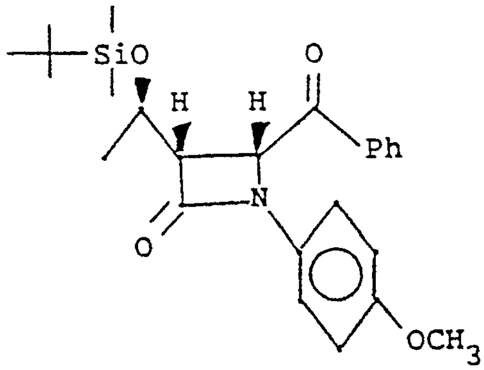

welches als Schritt das Inberührungbringen der chiralen Butyrylverbindung

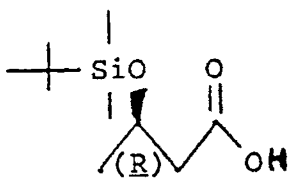

mit Oxalylchlorid bei Raumtemperatur unter wasserfreien Bedingungen unter Bildung des entsprechenden Säurechlorids

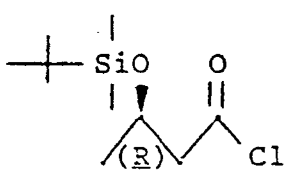

gefolgt vom Inberührungbringen des gebildeten Säurechlorids mit dem Imin

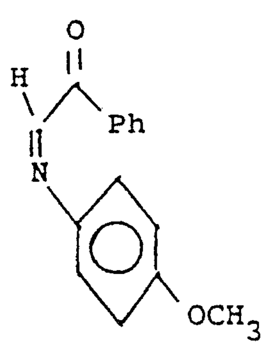

in Dichlormethan als Lösungsmittel bei -40° C in Gegenwart von Diisopropylethylamin und die Durchführung der Reaktion im Temperaturbereich von -40 bis 25° C über eine Zeit, die ausreicht, das erwünschte chirale Azetidinon zu ergeben, umfaßt.